# EUROPEAN PATENT APPLICATION

(11) **EP 2 574 416 A1**
(43) Date of publication of application: **03.04.2013**
(21) Application number: 12186738.6
(22) Date of filing: 28.09.2012
(51) Int. Cl.: B23K 9/00, F16L 1/12

(54) **Thermal control apparatus**

(30) Priority: 28.09.2011 GB 201116717
(71) Applicant: MMC Group Limited, Stokesley North Yorkshire TS9 5JZ (GB)
(72) Inventor: McCullagh, John, Stokesley, TS9 5JZ (GB)
(74) Representative: Foot, Paul Matthew James

(57) **Abstract**

An apparatus (10) suitable for thermal control of a water immersed structure, the apparatus (10) comprising an insulating portion (12) and a connection arrangement (16) configured to releasably secure the insulating portion (12) against a surface of a water immersed structure so that water is at least partially displaced from said surface by said insulating portion, and
a lowering and/or raising arrangement configured for positioning the apparatus in relation to the water immersed structure, wherein the apparatus is configured to substantially encircle the water immersed structure during operation of the raising and/or lowering arrangement.

## Description

The present invention relates to an apparatus and a system suitable for thermal control of a water immersed structure, and to a method of deploying such a system.

It is often necessary to assemble or repair water immersed structures such as wind turbines on-site. There are obvious difficulties inherent in on-site assembly or repair of water immersed structures, in particular those due to the surrounding water.

One such difficulty is in carrying out processes such as arc welding. An important aspect of arc welding is maintaining the material to be welded at a suitably high temperature. Preheating to temperatures of around 60°C or above is usual. Where the exterior of a structure is in contact with water, and the interior is being welded at a welding surface, it is difficult to maintain the temperature of the welding surface at the required temperature of up to 250°C (although a maximum temperature of 120°C is preferable for wind turbines, so that paintwork is not damaged).

The water is a poor insulator and in addition moves, particularly in a tidal area, so that although the water contacting the structure exterior may be temporarily warmed during welding, the heat will be rapidly conducted away and/or the warmed water will soon flow away from the exterior, leaving cooler water in its place that will bring the temperature of the welding surface below the required level.

It is known to mitigate this problem with the use of a cofferdam, i.e. by constructing a barrier around the structure exterior to enclose an area, then evacuating water from the enclosed area to expose the exterior to air. However, there are difficulties with such a solution. Cofferdams are time consuming to assemble and operate. A pump must be provided to remove water and expose a surface. A seal must be created between the barrier and the exterior to ensure that water does not enter the enclosed area.

What is required is an improved means of thermal control for a water immersed structure.

According to the present invention there is provided an apparatus suitable for thermal control of a water immersed structure, the apparatus comprising an insulating portion and a connection arrangement. The connection arrangement is configured to releasably secure the insulating portion against a surface of a water immersed structure so that water is at least partially displaced from said surface by said insulating portion. Heating of the structure to a desired temperature thus requires less energy. The apparatus preferably further comprises a lowering and/or raising arrangement configured for positioning the apparatus in relation to the water immersed structure, wherein the apparatus is configured to substantially encircle the water immersed structure during operation of the raising and/or lowering arrangement.

The apparatus may further comprise a base portion, and the insulating portion may be supported by the base portion. The connection arrangement may be connected to the base portion, and/or the insulating portion may be movable relative to the base portion. The apparatus may further comprise an actuator configured to selectively deploy the insulating portion towards said surface. The actuator may be an inflatable component, and/or may be remotely operable.

The connection arrangement may comprise an adjustable length of flexible material, and/or may comprise a magnet. The magnet may be a permanent magnet, and/or may be remotely retractable.

The insulating portion may be deformable to conform to said surface. The insulating portion may comprise synthetic foamed rubber, and/or a low-density polyethylene foam. The insulating portion may comprise an outer layer and an inner layer, and the outer layer may be configured to contact said surface. The outer layer may be synthetic foamed rubber, preferably neoprene, and/or the inner layer may be a low-density polyethylene foam. The insulating portion may be shaped to conform to the structure against which it is to be secured. The insulating portion may substantially fully encircle the structure to which it is to be secured.

The insulating portion may be inflatable. The lowering and/or raising arrangement may comprise at least one flexible length of material, which may be a rope, and/or may comprise at least one pulley.

There is further provided a system suitable for thermal control of a water immersed structure, the system comprising two or more apparatus as described above, and a connection arrangement configured to link the apparatus to one another in series, such that the apparatus may be positioned about a water immersed structure. The connection arrangement may be the length of flexible material.

The apparatus or system may further comprise a water immersed structure such as a wind turbine or oil rig.

There is yet further provided a method of deploying a thermal control system on a water immersed structure comprising the steps of:
a) providing a system having an apparatus, the apparatus comprising an insulating portion; a connection arrangement configured to releasably secure the insulating portion against a surface of a water immersed structure; and a lowering and/or raising arrangement configured for positioning the apparatus in relation to the water immersed structure;
b) positioning the system about the structure such that the system substantially encircles the structure;
c) lowering or raising the system by means of the lowering and/or raising arrangement such that the insulating portion is at a surface to be thermally controlled; and
d) operating the connection arrangement to secure the insulating portion in position against the surface such that water is displaced from said surface by said insulating portion such that heating of the structure to a desired temperature requires less energy.

In step a), a system may be provided having two or more apparatus, each apparatus comprising an insulating portion; and a connection arrangement configured to link the apparatus to one another in series and to releasably secure the insulating portions against a surface of a water immersed structure;
in step c) the system may be positioned about the structure such that each insulating portion is at a surface to be thermally controlled; and
in step d) the connection arrangement may be operated to secure the insulating portions in position against the surface such that water is displaced from said surface by said insulating portions such that heating of the structure to a desired temperature requires less energy.

In step c) the system may be lowered from above the water level. Each apparatus may further comprise a surface attachment arrangement configured to releasably secure each respective insulating portion, whereupon the method may further comprise the step of:
e) operating the surface attachment arrangement to further secure each insulating portion in position against the surface. The surface attachment arrangement may be a magnet.

The lowering and/or raising arrangement comprises at least one length of flexible material. The length of flexible material may be a rope. The lowering and/or raising arrangement may comprise at least one pulley.

The method may further comprise the step f) of welding an internal surface opposite the surface to be thermally controlled.

Other aspects and preferred features of the invention will be apparent from the claims and following description of preferred embodiments made, by way of example only, with reference to the following drawings, in which:
Figure 1 is a perspective view of an apparatus suitable for thermal control of a water immersed structure according to a first embodiment of the invention;
Figure 2 is a cross-sectional view through the apparatus of Figure 1;

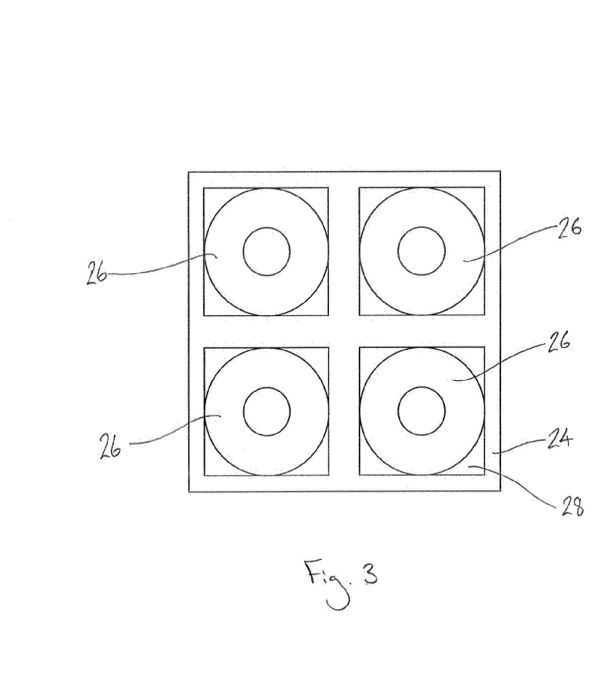

Figure 3 is a plan view of a base portion of the apparatus of Figures 1 and 2;
Figure 4 is a perspective view of a wind turbine with the apparatus of Figures 1 to 3 deployed thereon;
Figure 5 is a cross-sectional view through the wind turbine of Figure 4;
Figure 6 is a perspective partial view of the wind turbine of Figures 4 and 5;
Figure 7 is a perspective view of an apparatus according to a second embodiment of the invention;
Figure 8 is a perspective view of a wind turbine with an apparatus according to a third embodiment of the invention deployed thereon; and
Figure 9 is a cross-sectional view through the apparatus of the embodiment of Figure 8.

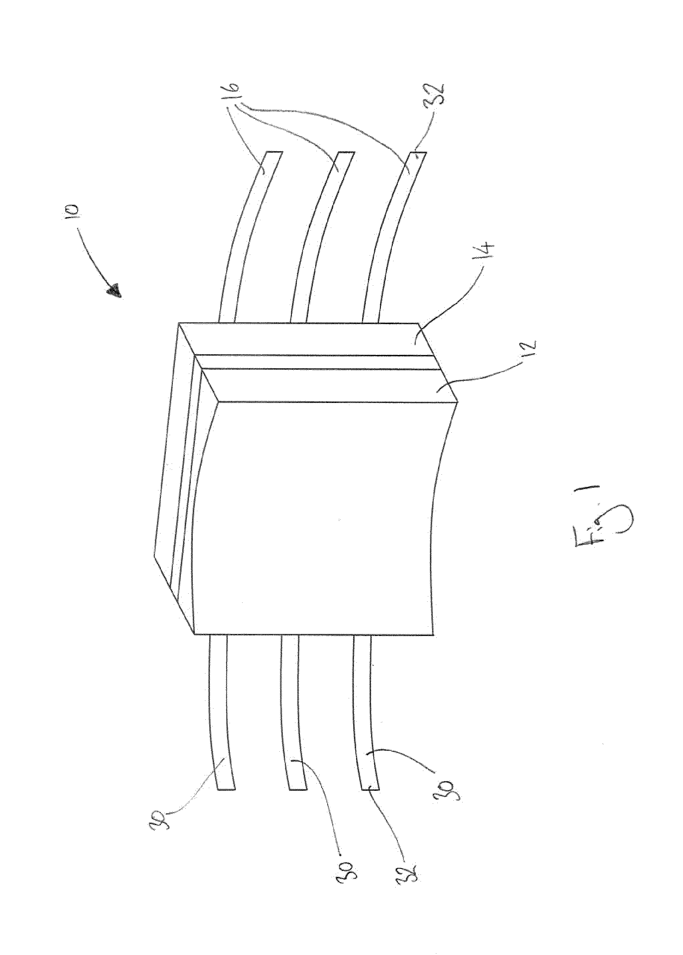

With reference to Figure 1, an apparatus suitable for thermal control of a water immersed structure is indicated generally at 10. The apparatus of this embodiment of the invention is configured for use in controlling the temperature of an external surface of a "monopile" wind turbine tower so that an internal surface of the wind turbine may be welded to temperature specifications required to maintain weld integrity and durability. Welding may take a considerable amount of time, and pre-heating and/or post-welding heat treatment may be required. The temperature may need to be controlled for a significant amount of time, so that the operation cannot simply be completed when the weld area is exposed, e.g. at low tide.

The apparatus 10 has an insulating portion 12, a base portion 14 and a connection arrangement 16. The insulating portion 12 is configured to be brought into contact with an external surface of a wind turbine, displacing water therefrom. The base portion 14 supports the insulating portion 12. The connection arrangement 16 is configured to secure the apparatus 10 in place at the external surface.

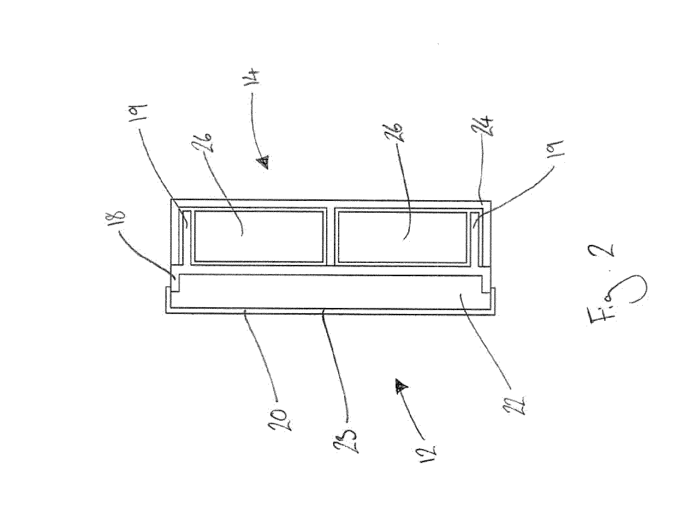

As shown in Figure 2, the insulating portion 12 has a frame 18 and outer 20 and inner 22 layers of insulation. In this embodiment, the frame 18 is wooden, but may be of some other suitable material, such as plastics or metal. The frame 18 has four elongate guide members 19 that extend within the base portion 14 to locate the insulating 12 and base 14 portions relative to one another.

The outer layer 20 is of a non-absorbent insulating material such as an expanded polymer or synthetic expanded foam, preferably neoprene (polychloroprene). Alternatively, the outer layer may be of natural material such as rubber. The inner layer 22 is relatively thick in comparison to the outer layer 20, and is of an insulating material such as a low-density polyethylene foam or other suitable non-absorbent material. The inner layer 22 extends beyond the frame, and has a concave contact surface 23 that corresponds to the external shape of the wind turbine tower. The outer layer 20 is secured to the frame 18 by rubber strips (not shown) about its edges, and retains the inner layer 22 within the frame 18. The outer layer 20 is stretched against the inner layer 22 such that it follows the curve of the contact surface 23. Both layers 20, 22 are deformable.

The base portion 14, also as shown in Figure 2, has a base frame 24 coupled to the frame 18 such that the frame 18 can be moved in relation to the base portion 14. In this embodiment the frames 18, 24 are coupled to one another by an accordion-type joint of pleated rubber (not shown) that can be expanded to allow movement. The base frame 24 is wooden, but may be of some other suitable material such as plastics or metal.

The base portion 14 further has an actuator or actuators 26 supported by the base frame 24. The actuators 26 are used to move the insulating portion 12 in relation to the base portion 14. In this embodiment, the actuators are four inflatable components 26 such as inner tubes or balloons. The base frame 24 defines four recesses 28. A component 26 is retained within each recess 29. The components 26 share a conduit a remote source of compressed air (not shown) through which they can be inflated. When inflated, the expansion of the components 26 pushes the insulating portion 12 away from the base portion 14. Each component 26 has a valve (not shown) by which they can be deflated, to allow the insulating portion 12 to move in relation to the base portion 14.

The connection arrangement 16 includes in this embodiment three straps 30 connected to the base portion 14. The straps 30 are flexible. The straps 30 are connected to the base frame 24, passing through eyelets (not shown) defined by the base frame 24. The straps 30 are configured to encircle the tower 35 of a wind turbine 36. Free ends 32 of each strap 30 are held together by a connector (not shown) which includes a ratchet mechanism so that the strap 30 length and tension may be adjusted.

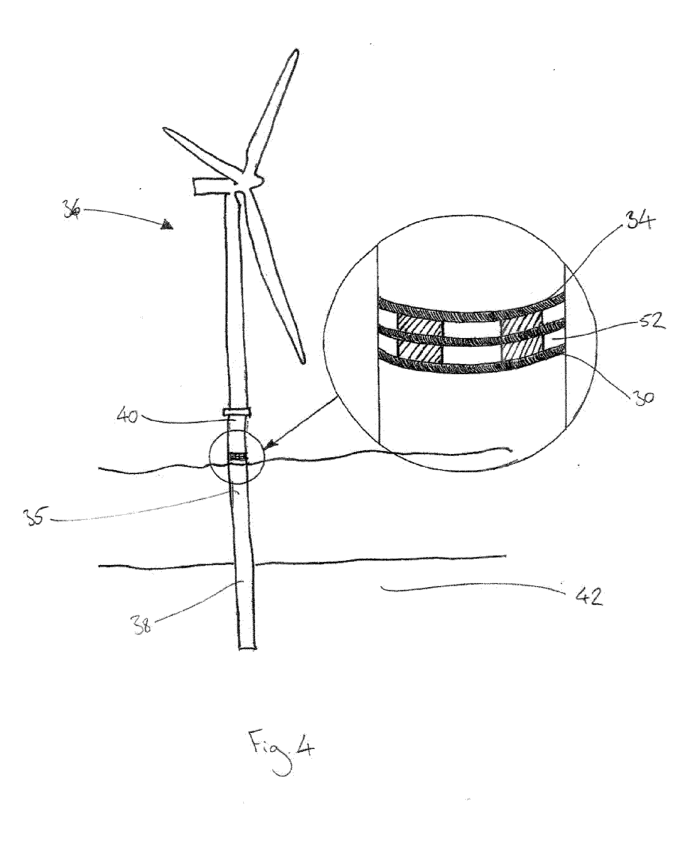

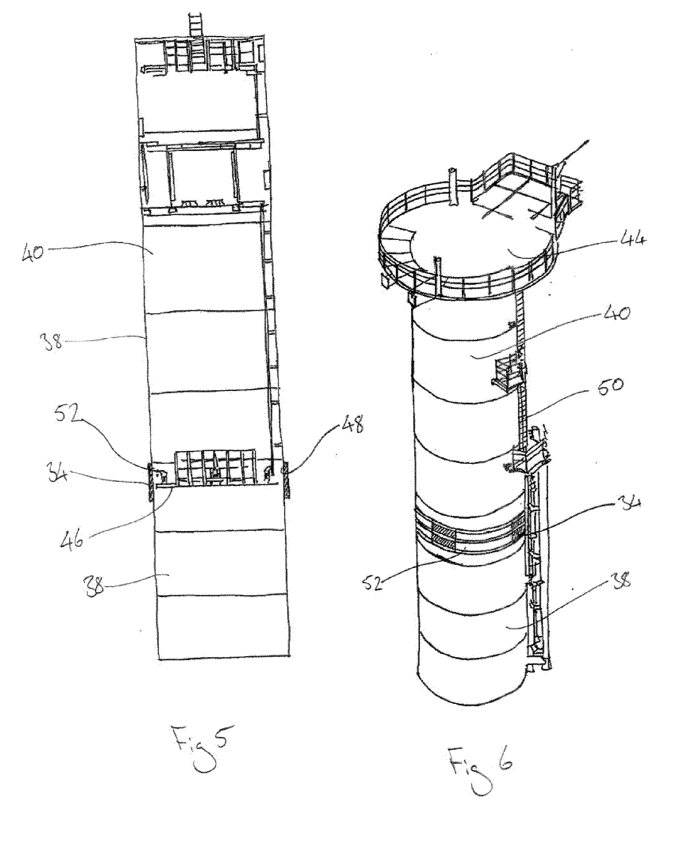

With reference to Figures 4, 5 and 6, a system 34 having a series of six apparatus 10 linked to one another is used to thermally control a number of points of an external surface of a wind turbine 36. The apparatus 10 are connected to one another by the straps 30.

In the example shown in Figures 4, 5 and 6, a transition piece 40 of the wind turbine tower 35 is positioned on a pile 38. The transition piece 40 is to be modified by the installation of steel brackets (not shown). Operations are carried out from a work platform 44 at the top of the upper part 40, from an internal work platform 46 at a weld site 48, and from an external ladder 50. The compressed air source (not shown) is situated at the work platform 44.

As shown in Figure 4, the weld site 48 is above sea level. However, as the tide rises the weld site 48 will become below sea level, and an external surface 52 of the transition piece 40 will be in contact with water, thus leading to the temperature problems described above.

In use, the system 34, with the free ends 32 of the straps 30 connected to one another such that the system 34 substantially encircles the wind turbine 36, is lowered from the work platform 44 via ropes or other suitable means over the transition piece 40 until the weld site 48 is reached. In this embodiment, the system 34 comprises a lowering/raising arrangement (not shown) used to lower the system 34 from the work platform 44. In this embodiment the lowering/raising arrangement includes nylon ropes and at least one pulley attached to the work platform 44, to improve control during lowering and/or raising of the system 34. The lowering/raising arrangement can also be used to lower or raise the system 34 to the weld site 48 from a vessel or adjoining structure.

In alternative embodiments the lowering/raising arrangement includes one or more levers and/or other actuators, or includes a crane and at least one flexible length of material such as a rope. The rope of the lowering/raising arrangement may be of nylon or other suitable material, or may be wire rope of a suitable material such as steel. In certain embodiments a pulley may not be required.

The system 34 is positioned so that the ratchet mechanism is aligned with the external ladder 50. A worker secured to the external ladder 50 in accordance with safe working practice uses the ratchet mechanism to tighten the straps 30, to secure the system 34 at the external surface 52 and adjust the system 34 tension such that the insulating portion 12 of each apparatus 10 is in contact with the external surface 52. The worker may then return to the work platform 44, as the system 34 can be deployed remotely. Alternatively, the straps 30 may be tightened from a support vessel (not shown).

The source of compressed air is activated from the work platform 44 to inflate the components 26. The insulating portions 12 are moved by the inflated components 26 so that they are pressed against the external surface 52. When the tide rises and water flows over the system 34, the insulating portions 12 inhibit the flow of water over the external surface 52. It is difficult for water to come between the insulating portions 12 and the external surface 52, as the insulating portions 12 are held against the external surface 52 by the inflated components 26. The layers 20, 22 insulate the external surface 52, improving heat retention. Any water that does contact the surface 52 will be trapped by the external layer 20, and will be warmed during welding. The surface 52 has improved heat retention, and welding is more easily carried out.

When welding is complete, the system 34 is removed. The components 26 are allowed to deflate, so that the insulating portion 12 is no longer held against the surface 52. The straps 30 are lengthened via the ratchet mechanism, releasing tension in the straps 30 allow the system 34 to be moved in relation to the surface 52. The system 34 is then raised to the work platform 44.

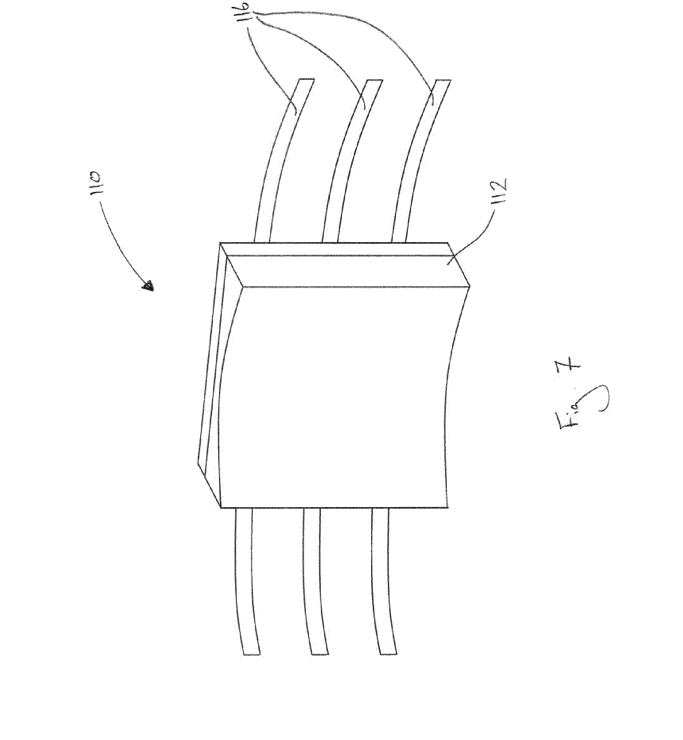

A second embodiment according to the present invention is shown in Figure 7. In this embodiment, like parts are illustrated by similar reference numerals but with the addition of the prefix "1".

The apparatus 110 of this embodiment comprises an insulating portion 112 and a connection arrangement 116. The straps 130 of the connection arrangement 116 are connected to the frame 118, rather than to a base portion as in the previous embodiment.

In use, the straps 130 are tightened by means of the ratchet mechanism (not shown) as in the first embodiment. However, in this embodiment, the tension in the straps 130 alone holds the insulating portion 112 against an external surface of the wind turbine tower 135, and no actuators are required. As in the first embodiment, the system 134 may comprise a series of apparatus 110 of this embodiment linked to one another.

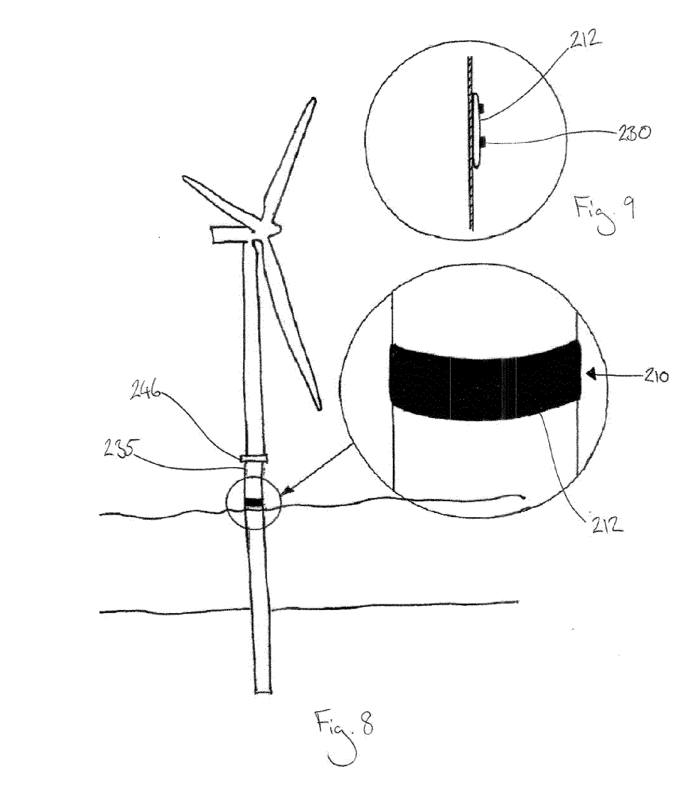

A third embodiment according to the present invention is shown in Figures 8 and 9. In this embodiment, like parts are illustrated by similar reference numerals but with the addition of the prefix "2".

The apparatus 210 of this embodiment comprises an insulating portion in the form of an elongate inflatable bag 212. The bag 212 of this embodiment is configured to substantially encircle the wind turbine tower 235. The apparatus 210 comprises a conduit to a remote source of compressed air (not shown) for the purpose of inflation. The bag 212 is in this embodiment of natural or synthetic rubber material, though in alternative embodiments it may be of an expanded polymer or synthetic expanded foam such as neoprene (polychloroprene).

The straps 230 of the connection arrangement extend along the length of a longitudinal axis of the bag 212 to encircle the tower 235, and are tightened by a tensioning arrangement such as a ratchet mechanism. In an alternative embodiment (not shown), the straps 230 are connected to the ends of the bag 212, and extend from the ends of the bag 212 to meet one another rather than wholly encircling the tower 235.

The bag 212 is installed in a deflated condition. The bag 212 is arranged about the tower 235 and the free ends of the straps 230 are connected to one another, so that the apparatus 210 encircles the tower 235. A lowering/raising arrangement comprising one or more ropes and/or pulleys is used to lower the apparatus 210 from the work platform 246 until the weld site is reached. In alternative embodiments, the lowering/raising arrangement may be used to lower or raise the apparatus 210 from a vessel or an adjacent structure.

Once the apparatus 210 is in position at the weld site the straps 230 are tightened via the tensioning arrangement, clamping the bag 212 against the weld site. The bag 212 is then inflated, so that it is deformed about the weld site and further clamped against the weld site. Insulation of the weld site is thus provided.

When welding is complete and the apparatus 210 is no longer required, the bag 212 is deflated and the straps 230 are loosened via the tensioning arrangement. The apparatus 210 is then raised to the work platform 246 via the lowering/raising arrangement.

In an alternative embodiment (not shown), the insulation portion 212 comprises two or more bags 212 connected to one another by the straps 230 or otherwise.

In a further embodiment (not shown), the connection arrangement 16 includes a surface attachment arrangement in the form of permanent magnets as well as at least one strap 30. The magnets are remotely operable by means of a twist breakaway cam mechanism operated by a lever, where the lever extends via a linkage such as a cord to a remote location. In a yet further embodiment (not shown), the surface attachment arrangement includes suction type or other temporary and non-invasive fixings, or permanent mechanical fixings such as bolted or welded brackets. The insulating portion may be directly and permanently bonded to the surface 52.

Where each apparatus 10 includes magnets, the magnets are deployed from the work platform 44 to secure each base portion 14 to the transition piece 40 after the straps 30 have been tightened and prior to deployment of the components 26. The magnets are remotely retracted during removal of the system, so that the apparatus 10 can be removed from the surface 52. In this embodiment, the primary means of attachment is intended to be provided by the magnets and the straps perform a secondary securement function.

In alternative embodiments (not shown), the system may be adapted for other types of wind turbine or other types of water immersed structures, such as oil rigs. The contact surface of the apparatus may be differently shaped to conform to such alternative structures; for example, the insulating portion 12 may not be concave.

The actuators may be some other type of actuator, such as pistons. There may be a single actuator only, or any number of actuators. The compressed air source may be attached to the base portion 14, and may be remotely operable. The components 26 may be hydraulically or mechanically rather than pneumatically deployed. The insulating portion may be biased towards the base portion, so that the insulating portion returns to the base portion when the actuators are no longer deployed.

The insulating portion may comprise a single insulating layer of rubber, or a synthetic material such as expanded polyethylene, rather than inner and outer layers, and may not have a frame.

The system 34 may have a single apparatus that extends around the turbine 36, such as a single sheet of neoprene, or may have other numbers of apparatus. The system may be deployed below sea level, as water will be displaced from the surface during deployment, and so can be used in non-tidal waters. The system may be raised from below or transferred from an adjoining structure, or from a vessel or other transportation means, rather than being lowered from a platform.

The ratchet mechanism may be some other suitable form of tensioning mechanism such as a turnbuckle. The apparatus may include one or more heating elements in the insulating portion configured to heat the weld site.

The apparatus may be permanently or semi-permanently attached to a wind turbine rather than being removable. For example, the apparatus may be bonded to the wind turbine with an adhesive, or attached to the wind turbine with fasteners. On installation, the system 34 may be lowered to float at the surface of the water, before being raised or lowered into place.

The apparatus and/or system can be used with a structure other than a wind turbine, such as part of an oil rig or other water immersed structure having some part above the waterline.

There are clear advantages to the above system. Displacing water from the external surface allows that surface to better retain heat put in during welding. No pump is required to displace water, as it is simply moved by the insulating portion. Heat retention is further aided by the insulating portion, which will itself retain heat provided by the welding process, and thus keep the external surface warmer.

The deformable nature of the insulating outer and inner layers allows the system to be effective even where the external surface is irregular, e.g. wherein the external surface has barnacles or other marine growth attached thereto. There is no need for a seal between the insulating portion and the external surface. Water that comes between the insulating portion and the surface will be trapped by the outer layer of the insulating portion, and will become warmed during welding.

The system is temporary, and is quick and easy to install and remove. The system is easily transported, and can be remotely operated. No divers are required for installation or removal. The system advantageously does not damage the paintwork of the turbine 36.

## Claims

1. An apparatus suitable for thermal control of a water immersed structure, the apparatus comprising:
an insulating portion;
a connection arrangement configured to releasably secure the insulating portion against a surface of a water immersed structure so that water is at least partially displaced from said surface by said insulating portion; and
a lowering and/or raising arrangement configured for positioning the apparatus in relation to the water immersed structure, wherein the apparatus is configured to substantially encircle the water immersed structure during operation of the raising and/or lowering arrangement.

2. An apparatus according to claim 1 further comprising a base portion, wherein the insulating portion is supported by the base portion, preferably wherein the connection arrangement is connected to the base portion, and more preferably wherein the insulating portion is movable relative to the base portion, and preferably further comprising an actuator configured to selectively deploy the insulating portion towards said surface, preferably wherein the actuator is an inflatable component, and/or wherein the actuator is remotely operable.

3. An apparatus according to any preceding claim wherein the connection arrangement comprises an adjustable length of flexible material.

4. An apparatus according to any preceding claim wherein the connection arrangement comprises a magnet, preferably a permanent magnet, and more preferably wherein the magnet is remotely retractable.

5. An apparatus according to any preceding claim wherein the insulating portion is deformable to conform to said surface.

6. An apparatus according to any preceding claim wherein the insulating portion includes synthetic foamed rubber, preferably neoprene, and/or wherein the insulating portion includes a low-density polyethylene foam.

7. An apparatus according to any preceding claim wherein the insulating portion comprises an outer layer and an inner layer, the outer layer being configured to contact said surface, preferably wherein the outer layer is synthetic foamed rubber, and wherein the inner layer is low-density polyethylene foam, preferably wherein the insulating portion is shaped to conform to the structure against which it is to be secured.

8. An apparatus according to any preceding claim wherein the insulating portion substantially fully encircles the structure to which it is to be secured, preferably wherein the insulating portion is inflatable.

9. An apparatus according to any preceding claim wherein the lowering and/or raising arrangement comprises at least one flexible length of material, preferably a rope, and preferably comprises at least one pulley.

10. A system suitable for thermal control of a water immersed structure, the system comprising
two or more apparatus according to any preceding claim; and
a connection arrangement configured to link the apparatus to one another in series, such that the apparatus may be positioned about a water immersed structure, preferably wherein the connection arrangement comprises an adjustable length of flexible material.

11. An apparatus or system according to any preceding claim further comprising a water immersed structure such as a wind turbine or oil rig.

12. A method of deploying a thermal control system on a water immersed structure comprising the steps of:
a) providing a system having an apparatus, the apparatus comprising an insulating portion; a connection arrangement configured to releasably secure the insulating portion against a surface of a water immersed structure; and a lowering and/or raising arrangement configured for positioning the apparatus in relation to the water immersed structure;
b) positioning the system about the structure such that the system substantially encircles the structure;
c) lowering or raising the system by means of the lowering and/or raising arrangement such that the insulating portion is at a surface to be thermally controlled; and
d) operating the connection arrangement to secure the insulating portion in position against the surface such that water is displaced from said surface by said insulating portion such that heating of the structure to a desired temperature requires less energy,
preferably wherein the lowering and/or raising arrangement comprises at least one length of flexible material, preferably a rope, and preferably comprises at least one pulley.

13. A method according to claim 12 wherein:
in step a), a system is provided having two or more apparatus, each apparatus comprising an insulating portion; and the connection arrangement is configured to link the apparatus to one another in series and to releasably secure the insulating portions against a surface of a water immersed structure;
in step c) the system is positioned about the structure such that each insulating portion is at a surface to be thermally controlled; and
in step d) the connection arrangement is operated to secure the insulating portions in position against the surface such that water is displaced from said surface by said insulating portions such that heating of the structure to a desired temperature requires less energy, preferably wherein in step c) the system is lowered from above the water level.

14. A method according to claim 12 or claim 13 wherein the or each apparatus further comprises a surface attachment arrangement configured to releasably secure the or each respective insulating portion to the surface, further comprising the step of:
e) operating the surface attachment arrangement to further secure the or each insulating portion in position against the surface, preferably wherein the surface attachment arrangement is a magnet.

15. A method according to any one of claims 12 to 14 further comprising the step f) of welding an internal surface opposite the surface to be thermally controlled.
